# DEMANDE DE BREVET EUROPEEN

(11) **EP 4 020 772 A1**
(43) Date de publication de la demande: **29.06.2022**
(21) Numéro de dépôt: 21217874.3
(22) Date de dépôt: 27.12.2021
(51) Int. Cl.: H02K 9/22, H02K 9/08, H02K 5/20

(54) **MOTEUR ÉLECTRIQUE ET VÉHICULE COMPORTANT UN TEL MOTEUR**

(30) Priorité: 28.12.2020 FR 2014187
(71) Demandeur: ALSTOM Holdings, 93400 Saint-Ouen-sur-Seine (FR)
(72) Inventeur: VAILLANT, Damien, 25290 Ornans (FR)
(74) Mandataire: Lavoix

(57) **Abrégé**

L'invention concerne un moteur électrique (10) comportant un rotor (20), un stator (15) guidant le rotor (20) en rotation autour d'un axe (A), le rotor (20) comportant un arbre (95) s'étendant selon l'axe (A) et un premier élément (100) parmi un induit et un inducteur monté sur l'arbre (95), le stator (20) comportant un deuxième élément (40) parmi l'induit et l'inducteur et un roulement (35) guidant l'arbre (95) en rotation, l'inducteur et l'induit coopérant et générant une force tendant à mettre l'arbre (95) en rotation. Le stator (15) comporte un échangeur thermique (45), le rotor (20) comporte un ventilateur (105) interposé selon une direction parallèle à l'axe (A) entre le roulement (35) et le premier élément (100), le ventilateur (105) générant un flux d'air baignant une portion du rotor (20), l'échangeur thermique (45) refroidissant ledit flux.

## Description

La présente invention concerne un moteur électrique. La présente invention concerne également un véhicule comportant un tel moteur.

Des moteurs électriques sont utilisés pour de nombreuses applications, telles que la propulsion de véhicules électriques, notamment de véhicules de transport en commun tels que des trains ou des tramways, ou encore pour actionner des machines de types variés. De tels moteurs comportent en général un rotor destiné à être mis en rotation autour d'un axe du rotor, et un stator prévu pour guider le rotor lors de sa rotation.

Le stator comporte des éléments générant un champ magnétique, notamment des électro-aimants ou bobinages statoriques, ainsi que des moyens de guidage du rotor tels que des roulements à billes, ces différents éléments étant supportés directement ou indirectement par un châssis cylindrique entourant le rotor. Le rotor, de son côté, comporte un arbre sur lequel est monté un ou des éléments magnétiques, par exemple des électro-aimants ou bobinages statoriques, dont l'interaction avec les éléments magnétiques du stator génère une force mettant en rotation le rotor. Lors du fonctionnement du moteur, le stator et le rotor sont donc susceptibles de chauffer sous l'effet du circuit magnétique ou encore des différents frottements causés par la rotation du rotor.

En particulier, le ou les éléments magnétiques du rotor peuvent chauffer de manière importante, ce qui entraîne par conduction un échauffement des autres parties du rotor, notamment de l'arbre et des roulements qui guident l'arbre en rotation. Or, les roulements sont des éléments mécaniques sensibles aux variations de température, puisque ces variations entraînent des dilatations ou contractions des différentes pièces du roulement, ce qui modifie les jeux internes entre ces différentes pièces. Par exemple, la bague intérieure du roulement, fixée à l'arbre du rotor, s'échauffe plus que la bague extérieure montée sur le châssis.

Ces variations de jeu mécanique entraînent des frottements et donc une usure prématurée des roulements, sans compter que les frottements ainsi générés participent également à l'échauffement du roulement. En outre, la graisse utilisée dans les roulements tend aussi à voir sa durée de vie diminuée lorsqu'elle est exposée à des températures trop élevées. Ainsi, l'échauffement causé par le ou les éléments magnétiques du rotor augmentent de manière importante la fréquence de défaillance et de remplacement des roulements. En conséquence, la nécessité d'éviter un échauffement excessif des roulements est une contrainte importante de dimensionnement des moteurs.

Il existe donc un besoin pour un moteur électrique, comportant un stator et un rotor, le stator comportant au moins un roulement de guidage du rotor, qui soit plus fiable que les moteurs de l'état de la technique.

A cet effet, il est proposé un moteur électrique comportant un rotor, un stator configuré pour guider le rotor en rotation autour d'un axe, un induit et un inducteur, le rotor comportant un arbre s'étendant selon l'axe et un premier élément parmi l'induit et l'inducteur monté sur l'arbre, le stator comportant un deuxième élément parmi l'induit et l'inducteur et au moins un roulement, le deuxième élément et le premier élément étant configurés pour coopérer et générer une force tendant à mettre l'arbre en rotation autour de l'axe, le roulement étant configuré pour guider l'arbre lors de la rotation, le stator comportant un échangeur thermique et le rotor comportant un ventilateur interposé selon une direction parallèle à l'axe entre le roulement et le premier élément, le ventilateur étant configuré pour générer un flux d'air lors de la rotation de l'arbre, le flux d'air baignant une portion du rotor interposée entre le premier élément et le roulement, l'échangeur thermique étant configuré pour refroidir ledit flux d'air.

Selon des modes de réalisation avantageux mais non obligatoires, le moteur comporte une ou plusieurs des caractéristiques suivantes, prise(s) isolément ou selon toutes les combinaisons techniquement possibles :
- le stator comporte un châssis entourant le rotor, le stator comportant en outre un flasque s'étendant dans un plan perpendiculaire à l'axe, le flasque étant solidaire du châssis et étant configuré pour maintenir le roulement en position par rapport au châssis, l'échangeur thermique étant monté sur le flasque.
- l'échangeur thermique comporte un ensemble de premières ailettes configurées pour transférer un flux thermique depuis le flux d'air jusqu'au flasque ou au châssis.
- l'échangeur thermique comporte un circuit de refroidissement configuré pour conduire un liquide de refroidissement depuis une entrée du circuit jusqu'à une sortie du circuit de refroidissement, le liquide de refroidissement étant propre à refroidir le circuit de refroidissement.
- les premières ailettes sont solidaires du flasque et configurées pour transférer un flux thermique depuis le flux d'air jusqu'au flasque.
- l'échangeur thermique est disposé radialement en regard du ventilateur.
- le ventilateur comporte un ensemble de deuxièmes ailettes solidaires de l'arbre et entraînées par l'arbre lors de sa rotation.
- chaque deuxième ailette s'étend selon une direction parallèle à l'axe de l'arbre.
- le deuxième élément est un électro-aimant, le stator comportant en outre des têtes de stator et un capot interposé entre les têtes de stator et l'échangeur thermique, le capot étant configuré pour empêcher la circulation d'un flux d'air entre les têtes de stator et l'échangeur thermique. Il est également proposé un véhicule, notamment un véhicule de transport en commun, qui comporte un moteur tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une vue schématique en coupe d'un premier exemple de moteur selon l'invention,
[Fig. 2] la figure 2 est une vue schématique en coupe du moteur de la figure 1, dans le plan II-II,
[Fig 3] la figure 3 est une vue schématique en coupe d'un deuxième exemple de moteur selon l'invention, et
[Fig. 4] la figure 4 est une vue schématique en coupe du moteur de la figure 3, dans le plan IV-IV.

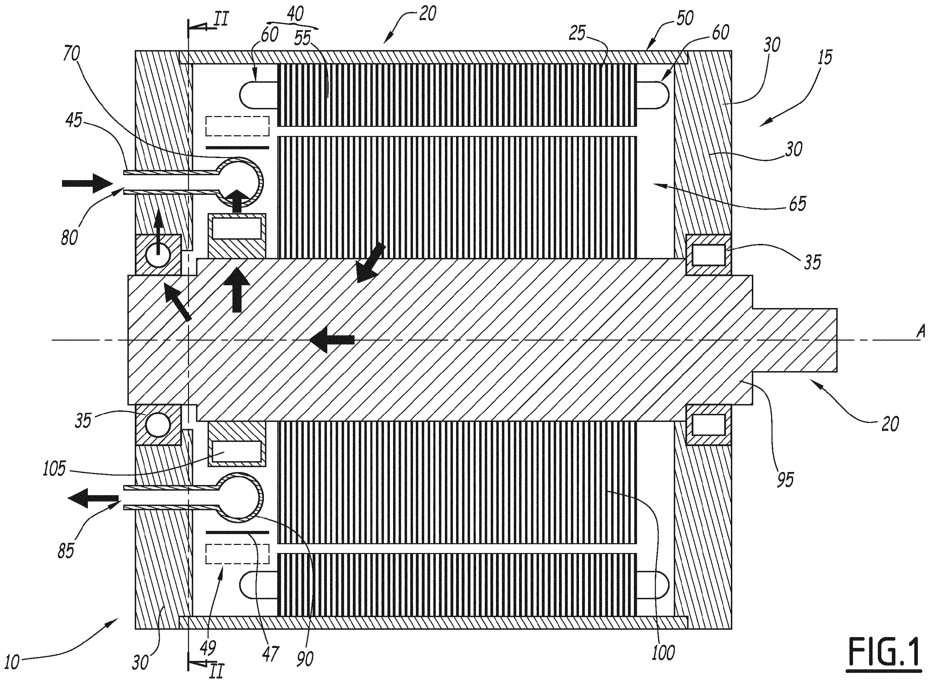

Un premier moteur électrique 10 est représenté schématiquement sur la figure 1.

Le moteur électrique 10 est représenté partiellement en coupe sur la figure 1. Le moteur électrique 10 est, par exemple, un moteur embarqué dans un véhicule, notamment un véhicule électrique, tel qu'un véhicule de transport en commun. Les trains, les tramways, les trolleybus et les bus sont des exemples de véhicules de transport en commun.

Le moteur 10 est, par exemple, configuré pour propulser le véhicule.

Le moteur 10 comporte un stator 15 et un rotor 20.

Le stator 15 est configuré pour guider le rotor 20 en rotation autour d'un axe A. Le stator 15 est, en outre, configuré pour exercer sur le rotor 15 une force tendant à mettre le rotor 15 en rotation.

Le stator 15 comporte un boîtier 22 comprenant un châssis 25, deux flasques 30, deux roulements 35, un inducteur 40, au moins un échangeur thermique 45 et optionnellement un capot 47.

Le boîtier 22 délimite une chambre dans laquelle le rotor 20 est au moins partiellement accueilli.

Le châssis 25 est cylindrique et s'étend selon l'axe A. Par exemple, le châssis 25 présente une section circulaire, toutefois la forme du châssis 25 est susceptible de varier.

En particulier, le châssis 25 est centré sur l'axe A.

Le châssis 25 est réalisé en un matériau métallique, notamment en acier, en fonte ou en aluminium.

Le châssis 25 entoure le rotor 20 dans un plan perpendiculaire à l'axe A. En particulier, le châssis 25 délimite la chambre accueillant le rotor 20 dans un tel plan, cette chambre étant notamment cylindrique. En d'autres termes, le châssis 25 présente une forme annulaire délimitée par deux surfaces cylindriques concentriques, chacune de ces surfaces s'étendant selon l'axe A et présentant une symétrie de révolution autour de l'axe A.

Le châssis 25 comporte deux extrémités 50 délimitant le châssis 25 selon une direction parallèle à l'axe A.

Chaque flasque 30 est réalisé en un matériau métallique, notamment en un acier, en fonte ou en aluminium.

Chaque flasque 30 s'étend radialement vers l'intérieur à partir d'une extrémité 50 du châssis 25.

De manière connue en soi, chaque flasque 30 porte un roulement 35 correspondant et solidarise notamment ce roulement 35 au châssis 25 pour maintenir ce roulement 35 en position par rapport au châssis 25.

Chaque flasque 30 entoure notamment, dans un plan perpendiculaire à l'axe A, le roulement 35 correspondant. Chaque flasque 30 s'étend notamment dans ledit plan.

Chaque roulement 35 est configuré pour guider en rotation le rotor 20 autour de l'axe A.

Chaque roulement 35 est fixé à un flasque 30 correspondant.

Chaque roulement 35 est, par exemple, un roulement à billes, ou encore un roulement à rouleaux, ou à aiguilles.

L'inducteur 40 est, de manière connue en soi, configuré pour exercer sur le rotor 20 une force destinée à mettre le rotor 20 en rotation.

L'inducteur est par exemple formé par un bobinage statorique 55 propre à être alimenté en énergie électrique. L'inducteur 40 comporte, par exemple, un premier électro-aimant/bobinage statorique 55. Le bobinage statorique 55 comprenant notamment des têtes de stator 60 en saillie par rapport au reste du stator suivant l'axe A.

Le premier électro-aimant 55 est configuré pour générer un champ magnétique lorsqu'il est alimenté électriquement.

Le premier électro-aimant 55 est fixé au châssis 25, en particulier disposé contre une face interne du châssis 25.

Il est défini, pour chaque flasque 30, un volume intermédiaire 65 délimité selon la direction parallèle à l'axe A par le premier électro-aimant 55 et par le flasque 30. Chaque volume intermédiaire 65 et donc interposé selon la direction parallèle à l'axe A entre le flasque 30 correspondant et le premier électro-aimant 55.

Chaque volume intermédiaire 65 est délimité radialement par le châssis 25, notamment entouré par le châssis 25 dans un plan perpendiculaire à l'axe A.

Chaque volume intermédiaire 65 est, notamment, un volume annulaire délimité radialement à l'extérieur par le châssis 25 et à l'intérieur par le rotor 20.

Chaque échangeur thermique 45 est configuré pour refroidir de l'air contenu dans un volume intermédiaire 65 respectif.

Le moteur 10 comporte, par exemple, un unique échangeur thermique 45 configuré pour refroidir de l'air contenu dans le volume intermédiaire 65 correspondant. En variante, le moteur 10 comporte deux échangeurs thermiques 45 configurés chacun pour refroidir l'air contenu dans un volume intermédiaire 65 respectif.

Chaque échangeur thermique 45 s'étend par exemple au moins partiellement dans le volume intermédiaire 65 correspondant. En particulier, au moins une portion de l'échangeur thermique 45 est portée par le flasque 30 délimitant le volume intermédiaire 65 correspondant à l'échangeur thermique 45 considéré et s'étend à partir du flasque 30 dans ledit volume intermédiaire 65.

Il est à noter que des modes de réalisation dans lesquels au moins un échangeur thermique 45 est porté par exemple par le châssis 25 sont également envisageables.

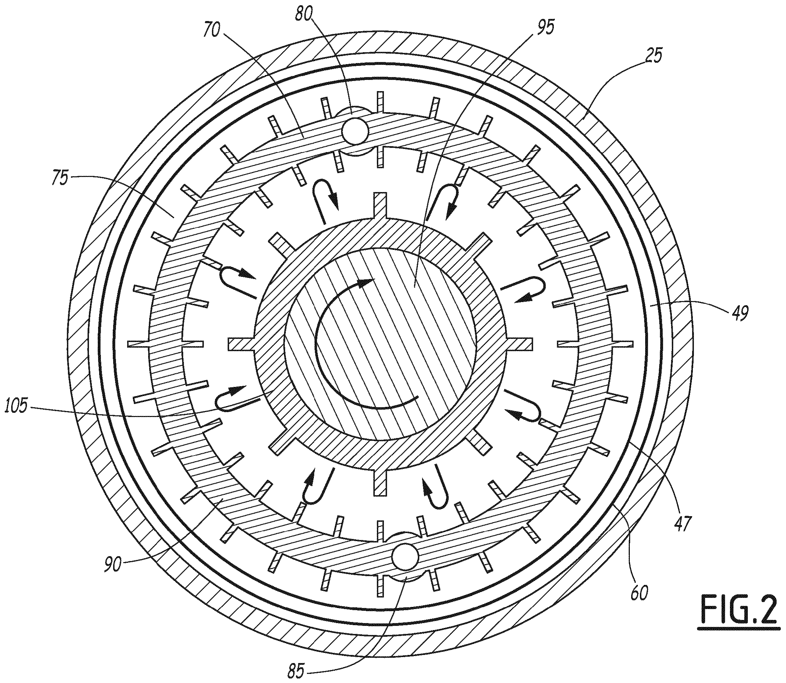

Chaque échangeur thermique 45 comporte, par exemple, un circuit de refroidissement 70, représenté notamment en détails sur la figure 2, et optionnellement un ensemble de premières ailettes 75.

Le circuit de refroidissement 70 est configuré pour refroidir le volume intermédiaire 65 correspondant par circulation d'un liquide de refroidissement propre à refroidir le circuit de refroidissement 70.

Le liquide de refroidissement est, par exemple, de l'eau, de l'huile, ou encore un mélange d'eau et d'un ou plusieurs additifs.

Le moteur 10 comporte, optionnellement, un circulateur configuré pour injecter le liquide de refroidissement à une première température dans le circuit de refroidissement 70 et pour recevoir du circuit de refroidissement 70 le liquide de refroidissement à une deuxième température strictement supérieure à la première température. En variante, le circulateur ne fait pas partie du moteur 10 mais est par exemple embarqué dans le véhicule.

Le circuit de refroidissement 70 comporte une entrée 80, une sortie 85 et un conduit 90.

Le circuit de refroidissement 70 est, par exemple, fixé à une face interne du flasque 30 correspondant de manière à s'étendre à partir du flasque 30 dans le volume intermédiaire 65 correspondant.

Le circuit de refroidissement 70 est réalisé en un matériau métallique, par exemple en acier, en fonte ou en aluminium.

L'entrée 80 traverse, par exemple, le flasque 30 correspondant selon une direction parallèle à l'axe A pour permettre l'entrée du liquide de refroidissement dans le conduit 90 à travers le flasque 30, depuis l'extérieur du boîtier 22.

La sortie 85 traverse, par exemple, le flasque 30 correspondant selon une direction parallèle à l'axe A pour permettre la sortie du liquide de refroidissement du conduit 90 à travers le flasque 30, jusqu'à l'extérieur du boîtier 22.

Le conduit 90 est configuré pour conduire le liquide de refroidissement de l'entrée 80 à la sortie 85.

Le conduit 90 s'étend le long d'une ligne propre. La ligne propre est, par exemple, une ligne circulaire. En particulier, la ligne propre appartient à un plan perpendiculaire à l'axe A et est centrée sur l'axe A.

Un rayon de la ligne propre est, par exemple, compris entre 25 et 150 mm.

Le conduit 90 est, par exemple, un conduit à section circulaire. La section du conduit 90 est définie en tout point comme étant l'intersection du conduit 90 et d'un plan perpendiculaire en ce point à la ligne propre.

Un diamètre de section du conduit 90 est compris, par exemple, entre 6 mm et 20 mm.

L'entrée 80 et la sortie 85 s'étendent, par exemple, chacune le long d'une ligne propre parallèle à l'axe A et concourante avec la ligne propre du conduit 90, les points d'intersection entre, d'une part, les lignes propres de l'entrée 80 et du conduit 90, et, d'autre part, les lignes propres de la sortie 85 et du conduit 90 étant, par exemple, diamétralement opposées, donc reliés l'une à l'autre par un diamètre de la ligne propre du conduit 90.

Chaque première ailette 75 est portée par le conduit 90. En particulier, chaque première ailette 75 est solidaire du conduit 90 et est configurée pour transmettre un flux thermique au conduit 90.

Chaque première ailette 75 est réalisée en un matériau métallique, par exemple en acier, en fonte ou en aluminium.

Chaque première ailette 75 s'étend, par exemple, dans un plan contenant l'axe A.

Chaque première ailette 75 est, par exemple, rectangulaire ou trapézoïdale.

Le nombre de premières ailettes 75 est, par exemple, compris entre 10 et 100.

Il est à noter que le nombre, la forme et les dimensions des ailettes 75 sont susceptibles de varier.

Chaque capot 47 est accueilli dans un volume intermédiaire 65 correspondant.

Chaque capot 47 est configuré pour empêcher la circulation d'un flux d'air entre les têtes de stator 60 et l'échangeur thermique 45 du volume intermédiaire 65 correspondant.

Chaque capot 47 entoure, dans un plan perpendiculaire à l'axe A, l'échangeur thermique 45 accueilli dans le même volume intermédiaire 65. Chaque capot 47 est, en particulier, interposé radialement entre les têtes de stator 60 et l'échangeur thermique 45 correspondants.

Chaque capot 47 est, par exemple, un capot cylindrique centré sur l'axe A et s'étendant dans le volume intermédiaire 65 correspondant selon l'axe A.

Le capot 47 s'étend, par exemple, à partir du flasque 30 selon l'axe A. Le capot 47 est, notamment, fixé au flasque 30 ou venu de matière avec le flasque 30.

Selon un mode de réalisation, le capot 47 s'étend à partir du flasque 30 dans le volume intermédiaire 65, selon l'axe A, sur une distance supérieure ou égale à une distance sur laquelle l'échangeur 45 s'étend à partir du flasque 30.

Une distance, selon une direction perpendiculaire à l'axe A, entre l'axe A et le capot 47 (par exemple un diamètre du capot 47 s'il est cylindrique) est, par exemple, inférieure ou égale à une distance entre l'axe A et le point du rotor 100 le plus éloigné de l'axe A selon cette même direction.

Le capot 47 est, par exemple, réalisé en acier, en fonte ou en aluminium. Selon un mode de réalisation, le capot 47 comporte, sur une ou plusieurs de ses faces, une couche thermiquement isolante, telle qu'une couche de laine de roche.

Le capot 47 est, par exemple, configuré pour générer une lame d'air statique 49 entre le capot 47 et les têtes de stator 60. Dans cette variante le capot définit un espace intérieur creux de circulation d'air formant ladite lame d'air.

Le rotor 20 comporte un arbre 95, un induit 100 et un ventilateur 105.

L'arbre 95 s'étend selon l'axe A. L'arbre 95 est réalisé en un matériau métallique, notamment en acier.

Chaque roulement 35 guide l'arbre 95 en rotation, par exemple en étant interposé entre l'arbre 95, notamment une extrémité de l'arbre 95, et un flasque 30.

Selon le type du moteur, l'induit 100 est formé par un aimant permanent rotorique, un bobinage rotorique, ou une cage rotorique, qui est fixe par rapport à l'arbre 95 en étant monté autour de l'arbre 95. Le moteur est par exemple un moteur à aimant permanent, et dans ce cas l'induit rotorique est un aimant permanent rotorique.

Lorsque l'on effectue une alimentation du moteur en énergie électrique, le bobinage statorique 55 est alimenté en énergie électrique, ce qui induit une rotation de l'induit rotorique 100, autour de l'axe A par rapport au bobinage statorique 55. Dans le cas où l'on prévoit que l'induit rotorique 100 est formé par un bobinage rotorique, il peut être nécessaire d'alimenter également l'induit rotorique 100 en énergie électrique pour que la rotation soit induite.

Plus généralement, une alimentation électrique du moteur entraîne une rotation du rotor 20 par rapport au stator 15 autour de l'axe A.

L'induit 100 est monté sur l'arbre 95. En particulier, l'induit 100 est interposé radialement entre l'inducteur 40 et l'arbre 95.

L'induit 100 est, de manière connue en soi, configuré pour coopérer avec l'inducteur 40 pour générer une force tendant à mettre le rotor 20 en rotation autour de l'axe A par rapport au stator 15.

L'induit 100 est, par exemple, un électro-aimant ou un aimant permanent.

L'induit 100 est encadré, selon une direction parallèle à l'axe A, par les deux volumes intermédiaires 65. Ainsi, chaque volume intermédiaire 65 est partiellement délimité selon cette direction par l'induit 100.

Le nombre de ventilateur(s) 105 présent(s) dans le moteur 10 est susceptible de varier. Dans le mode de réalisation montré sur les figures 1 et 2, un unique ventilateur 105 est présent, toutefois des modes de réalisation à deux ventilateurs 105, un pour chaque volume 65, sont également envisagés.

Chaque ventilateur 105 est réalisé en un matériau métallique, notamment en acier, fonte ou aluminium.

Chaque ventilateur 105 est accueilli dans un volume intermédiaire 65 accueillant également un échangeur thermique 45. Chaque ventilateur 105 est donc interposé entre l'induit 100 et l'un des roulements 35 selon une direction parallèle à l'axe A.

Chaque ventilateur 105 est solidaire de l'arbre 95, et notamment mobile en rotation avec l'arbre 95.

Par exemple, chaque ventilateur 105 est formé par une ou plusieurs pièce(s) montée(s) sur l'arbre 95. En variante, au moins un ventilateur 105 est venu de matière avec l'arbre 95, par exemple formé par usinage de l'arbre 95.

Chaque ventilateur 105 est configuré pour, lors de la rotation de l'arbre 95, générer un flux d'air dans le volume intermédiaire 65 dans lequel le ventilateur 105 considéré est accueilli. Le flux d'air 105 est un flux d'air baignant une portion du rotor 20, cette portion étant interposée entre l'induit 100 et le roulement 35 disposé selon l'axe A du même côté du deuxième induit 100 que le ventilateur 105.

En particulier, le flux d'air généré par le ventilateur 105 baigne le ventilateur 105 et/ou une portion de l'arbre 95 disposée dans le même volume intermédiaire 65 que le ventilateur 105.

Le flux d'air est, notamment, un flux d'air baignant l'échangeur thermique 45 accueilli dans le même volume intermédiaire 65, notamment un flux d'air circulant depuis le ventilateur 105 jusqu'à l'échangeur 45 puis jusqu'au ventilateur 105 ou à l'arbre 95. Ainsi, l'échangeur thermique 45 est apte à refroidir ledit flux d'air.

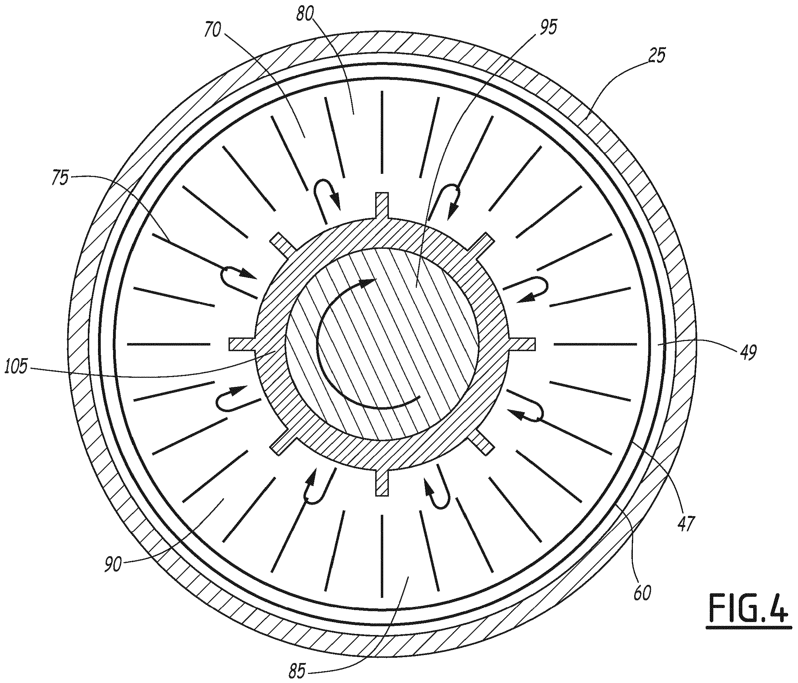

Le flux d'air est représenté sur les figures 2 et 4 par des flèches courbes.

Chaque ventilateur 105 est, par exemple, radialement en regard de l'échangeur thermique 45 correspondant. En d'autres termes, des projections orthogonales du ventilateur 105 et de l'échangeur 45 sur l'axe A se recouvrent au moins partiellement.

Ainsi, le ventilateur 105 est entouré dans un plan perpendiculaire à l'axe A par l'échangeur thermique 45, notamment par le conduit 90.

Il est entendu par « projection orthogonale sur l'axe A » le segment résultant de la projection orthogonale du ventilateur 105 sur un plan contenant l'axe A pour obtenir une forme plane, puis de la projection orthogonale de ladite forme sur l'axe A.

Chaque ventilateur 105 comporte, par exemple, un ensemble de deuxièmes ailettes 110 réparties autour de l'axe A, par exemple équiréparties.

Un écartement mesuré selon une direction radiale, c'est-à-dire une distance mesurée le long d'une droite perpendiculaire à l'axe A et concourante avec l'axe A, entre le ventilateur 105 et l'échangeur thermique 45, est défini.

L'écartement est, par exemple, mesuré entre un premier point d'une première ailette 75 et un deuxième point d'une deuxième ailette 110, le premier point étant le point de l'ailette 75 considérée le plus proche de l'arbre 95 selon la direction radiale, le deuxième point étant le point de l'ailette 110 considérée le plus éloigné de l'arbre 95 selon la direction radiale, l'écartement étant une différence une distance radiale entre le premier point et l'axe A et une distance radiale entre le deuxième point et l'axe A

L'écartement est, ainsi, la distance minimale, au cours de la rotation de l'arbre, entre les premier et deuxième points, selon la direction radiale.

Les deuxièmes ailettes 110 sont alors solidaires de l'arbre 95 et entraînées par l'arbre 95 lors de la rotation de l'arbre 95.

Chaque deuxième ailette 110 s'étend selon une direction parallèle à l'axe A, par exemple dans un plan contenant l'axe A.

Il est à noter que les dimensions, le nombre et la forme des deuxièmes ailettes 110 sont susceptibles de varier.

Grâce au ventilateur 105 et à l'échangeur 45, le flux d'air généré par le ventilateur 105 est refroidi par l'échangeur 45 et revient baigner une portion du rotor 95, notamment une portion de l'arbre 95 ou le ventilateur 105, disposée entre l'induit 100 et l'un des roulements 35. Ainsi, cette portion est refroidie, et la chaleur générée pendant le fonctionnement du moteur 10 par l'induit 100 et se propageant à travers l'arbre 95 est en partie dissipée. L'échauffement du roulement 35 est donc réduit et la durée de vie de celui-ci augmentée, ce qui augmente la fiabilité du moteur 10.

Le fait de monter l'échangeur 45 sur un flasque 30 permet de bénéficier du fait que le flasque 30 est en général plus frais que le châssis 25, qui est lui chauffé par l'inducteur 40. Le refroidissement du flux d'air est donc plus efficace.

Si au contraire l'échangeur 45 est monté sur le châssis 25, il est possible de rendre le circuit de refroidissement 70 commun avec le circuit de refroidissement du châssis 25, et donc de simplifier la structure et le fonctionnement du moteur 10, par exemple par l'utilisation d'un unique circulateur.

Un échangeur 45 à liquide est particulièrement efficace.

Lorsque l'échangeur 45 est disposé radialement en regard du ventilateur 105, la géométrie du ventilateur 105 est simplifiée, puisqu'il n'est pas nécessaire d'adapter cette géométrie pour donner une composante selon une direction parallèle à l'axe A au flux d'air.

Des ailettes 110 solidaires de l'arbre 95 permettent de former simplement un ventilateur 105.

Lorsque les ailettes 110 du ventilateur 105 s'étendent selon une direction parallèle à l'axe A, la direction du flux d'air généré ne dépend pas du sens de rotation du rotor 20. Le refroidissement est donc aussi efficace dans les deux sens de rotation, par exemple lorsque le véhicule avance ou recule.

Le capot 47 permet d'éviter que l'inducteur 40 et notamment les têtes de stator 60 ne réchauffe excessivement le flux d'air, en limitant la circulation d'air entre le ventilateur 105 et les têtes de stator 60. Le refroidissement du roulement 35 est donc plus efficace.

Une lame d'air statique entre le capot 47 et les têtes de stator 60 permet de limiter le transfert thermique entre les têtes de stator 60 et le capot 47, et donc entre les têtes de stator 60 et le flux d'air.

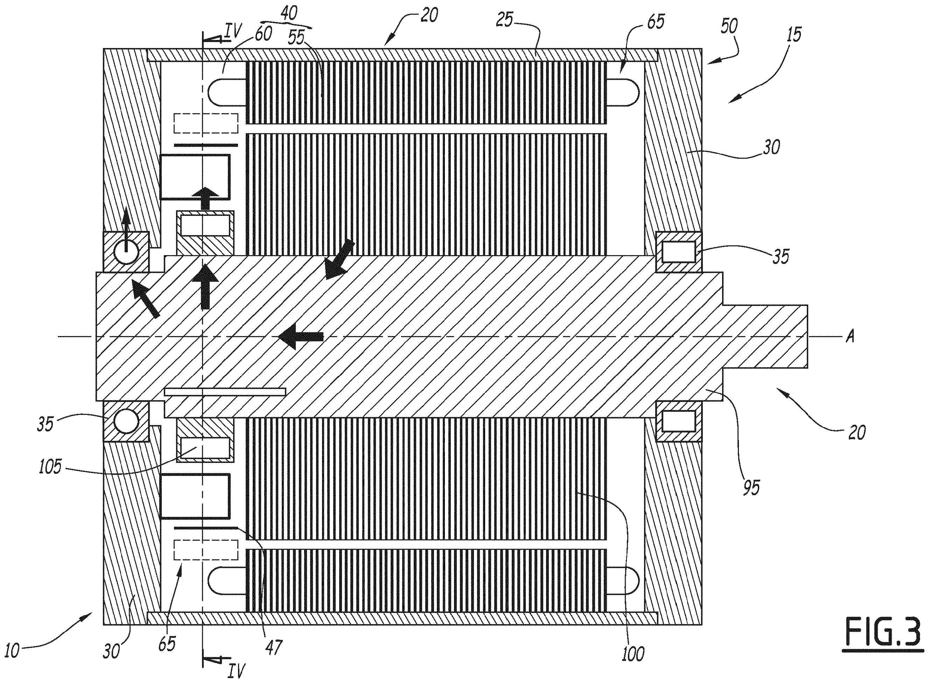

Un deuxième exemple de moteur 10 est représenté sur les figures 3 et 4 et va maintenant être décrit.

Les éléments identiques au premier exemple ne sont pas décrits à nouveau, seules les différences sont mises en évidence.

L'échangeur thermique 45 est dépourvu de circuit de refroidissement 70.

Les premières ailettes 75 sont solidaires du flasque 30 correspondant. En particulier, les premières ailettes 75 sont configurées pour transmettre un flux thermique depuis le flux d'air jusqu'au flasque 30.

Les premières ailettes 75 sont notamment directement fixées au flasque 30, par exemple soudées au flasque 30, venues de matière avec le flasque 30, ou fixées de toute autre manière permettant un contact thermique entre le flasque 30 et les ailettes 75.

Le flasque 30 comporte, optionnellement, des troisièmes ailettes (non représentées) sur sa face externe, c'est-à-dire la face du flasque 30 qui, parmi les faces du flasque 30 délimitant le flasque 30 selon une direction parallèle à l'axe A, est la plus éloignée de l'inducteur 40. Les troisièmes ailettes sont configurées pour refroidir le flasque 30 lorsque le moteur 10 est baigné dans un flux d'air, notamment lors d'un déplacement du véhicule.

Le deuxième exemple de moteur 10 est plus simple à fabriquer et à utiliser que le premier exemple, du fait de l'absence de circuit de refroidissement 70 et donc de circulateur dédié.

En variante, on prévoit que le stator comprend l'induit, alors que le rotor comprend l'inducteur.

## Revendications

1. Moteur électrique (10) comportant un rotor (20), un stator (15) configuré pour guider le rotor (20) en rotation autour d'un axe (A), un induit et un inducteur, le rotor (20) comportant un arbre (95) s'étendant selon l'axe (A) et un premier élément (100) parmi l'induit et l'inducteur monté sur l'arbre (95), le stator (20) comportant un deuxième élément (40) parmi l'induit et l'inducteur et au moins un roulement (35), le deuxième élément (40) et le premier élément (100) étant configurés pour coopérer et générer une force tendant à mettre l'arbre (95) en rotation autour de l'axe (A), le roulement (35) étant configuré pour guider l'arbre (95) lors de la rotation,
le moteur (10) étant **caractérisé en ce que** le stator (15) comporte un échangeur thermique (45) et le rotor (20) comporte un ventilateur (105) interposé selon une direction parallèle à l'axe (A) entre le roulement (35) et le premier élément (100), le ventilateur (105) étant configuré pour générer un flux d'air lors de la rotation de l'arbre (95), le flux d'air baignant une portion du rotor (20) interposée entre le premier élément (100) et le roulement (35), l'échangeur thermique (45) étant configuré pour refroidir ledit flux d'air,
dans lequel le deuxième élément (40) est un électro-aimant, le stator (15) comportant en outre des têtes de stator et un capot (47) interposé entre les têtes de stator (60) et l'échangeur thermique (45), le capot (47) étant configuré pour empêcher la circulation d'un flux d'air entre les têtes de stator (60) et l'échangeur thermique (45).

2. Moteur selon la revendication 1, dans lequel le stator (15) comporte un châssis (25) entourant le rotor (20), le stator (15) comportant en outre un flasque (30) s'étendant dans un plan perpendiculaire à l'axe (A), le flasque (30) étant solidaire du châssis (25) et étant configuré pour maintenir le roulement (35) en position par rapport au châssis (25), l'échangeur thermique (45) étant monté sur le flasque (30).

3. Moteur selon la revendication 2, dans lequel l'échangeur thermique (45) comporte un ensemble de premières ailettes (75) configurées pour transférer un flux thermique depuis le flux d'air jusqu'au flasque (30) ou au châssis (25).

4. Moteur selon l'une quelconque des revendications précédentes, dans lequel l'échangeur thermique (45) comporte un circuit de refroidissement (70) configuré pour conduire un liquide de refroidissement depuis une entrée (80) du circuit (70) jusqu'à une sortie (85) du circuit de refroidissement (70), le liquide de refroidissement étant propre à refroidir le circuit de refroidissement (70).

5. Moteur selon la revendication 3, dans lequel les premières ailettes (75) sont solidaires du flasque et configurées pour transférer un flux thermique depuis le flux d'air jusqu'au flasque (30).

6. Moteur selon l'une quelconque des revendications précédentes, dans lequel l'échangeur thermique (45) est disposé radialement en regard du ventilateur (105).

7. Moteur selon l'une quelconque des revendications précédentes, dans lequel le ventilateur (105) comporte un ensemble de deuxièmes ailettes (110) solidaires de l'arbre (95) et entraînées par l'arbre (95) lors de sa rotation.

8. Moteur selon la revendication précédente, dans lequel chaque deuxième ailette (110) s'étend selon une direction parallèle à l'axe (A) de l'arbre (95).

9. Véhicule, notamment véhicule de transport en commun, comportant un moteur (10) selon l'une quelconque des revendications précédentes.
